# EUROPÄISCHE PATENTANMELDUNG

(11) **EP 4 175 090 A1**
(43) Veröffentlichungstag der Anmeldung: **03.05.2023**
(21) Anmeldenummer: 21205584.2
(22) Anmeldetag: 29.10.2021
(51) Int. Cl.: H02H 1/00, H02H 3/00

(54) **SCHUTZEINRICHTUNG UND VERFAHREN ZUM ÜBERWACHEN EINES ELEKTRISCHEN ENERGIEVERSORGUNGSNETZES SOWIE COMPUTERPROGRAMMPRODUKT**

(71) Anmelder: Siemens Aktiengesellschaft, 80333 München (DE); Friedrich-Alexander-Universität Erlangen-Nürnberg, 91054 Erlangen (DE)
(72) Erfinder: Gaube, Sven, 91448 Emskirchen (DE); Kereit, Matthias, 12159 Berlin (DE); Kirkman, Robert, 90518 Altdorf (DE); Jaworski, Michael, 89420 Höchstädt (DE); Klumpp, Philipp, 90403 Nürnberg (DE); Lorz, Tobias, 91315 Höchststad a. d. Aisch (DE); Perez-Toro, Paula-Andrea, 91058 Erlangen (DE); Jaeger, Johann, 91058 Erlangen (DE); Nöth, Elmar, 91052 Erlangen (DE)
(74) Vertreter: Siemens Patent Attorneys

(57) **Zusammenfassung**

Die Erfindung betrifft eine Schutzeinrichtung (22) zum Überwachen eines elektrischen Energieversorgungsnetzes (10), mit einer Auswerteinrichtung (40), die dazu eingerichtet ist, unter Verwendung von Messwerten, die einen elektrischen Zustand des Energieversorgungsnetzes (10) an zumindest einer Messstelle angeben, eine Entscheidung zu treffen, ob sich das Energieversorgungsnetz (10) in einem zulässigen oder einem unzulässigen Betriebszustand befindet, wobei die Auswerteinrichtung (40) ein künstliches neuronales Netz umfasst.

Um eine besonders flexible und zuverlässige Möglichkeit zur Erkennung unzulässiger Betriebszustände in Energieversorgungsnetzen anzugeben, wird vorgeschlagen, dass die Auswerteinrichtung (40) dazu ausgebildet ist, zur Entscheidung über den Betriebszustand des Energieversorgungsnetzes eine Mustererkennung einer auf den Messwerten basierenden grafischen Darstellung (G) heranzuziehen.

Die Erfindung betrifft auch ein mit einer solchen Schutzeinrichtung (22) ausgeführtes Verfahren zur Überwachung eines Energieversorgungsnetzes (10) sowie ein entsprechendes Computerprogrammprodukt.

## Beschreibung

Die Erfindung betrifft eine Schutzeinrichtung zum Überwachen eines elektrischen Energieversorgungsnetzes, mit einer Auswerteinrichtung, die dazu eingerichtet ist, unter Verwendung von Messwerten, die einen elektrischen Zustand des Energieversorgungsnetzes an zumindest einer Messstelle angeben, eine Entscheidung zu treffen, ob sich das Energieversorgungsnetz in einem zulässigen oder einem unzulässigen Betriebszustand befindet, wobei die Auswerteinrichtung ein künstliches neuronales Netz (nachfolgend auch schlicht als "neuronales Netz" bezeichnet) umfasst.

Die Erfindung betrifft auch ein Verfahren zum Überwachen eines elektrischen Energieversorgungsnetzes und ein Computerprogrammprodukt.

Zur Überwachung von Primärkomponenten elektrischer Energieversorgungsnetze, z.B. Leitungen, Transformatoren, Motoren, Generatoren, werden sogenannte Schutzeinrichtungen eingesetzt, um unzulässige Betriebszustände der jeweils überwachten Primärkomponente, die beispielsweise durch Kurzschlüsse oder Erdschlüsse hervorgerufen sein können, zu erkennen und automatisch abzuschalten. Hierzu werden der Schutzeinrichtung üblicherweise an einer oder mehreren Messstellen in dem Energieversorgungsnetz aufgenommene Messwerte zugeführt, beispielsweise Strom- und/oder Spannungsmesswerte, die den Betriebszustand der Primärkomponente charakterisieren. Zur Ausführung einer Schutzfunktion wertet die bekannte Schutzeinrichtung daraufhin die Messwerte unter Ausführung eines sogenannten Schutzalgorithmus, also einer weitgehend starren deterministischen Berechnungs- und/oder logischen Verknüpfungsvorschrift zur Auswertung der aufgenommenen Messwerte, aus und erzeugt in Abhängigkeit vom Ergebnis der Auswertung eine Ausgabe zur Information an den Betreiber des Energieversorgungsnetzes und gegebenenfalls ein Auslösesignal, das einen mit der Schutzeinrichtung in Verbindung stehenden Leistungsschalter zum Öffnen seiner Schaltkontakte veranlasst, um die fehlerbehaftete Primärkomponente vom übrigen Energieversorgungsnetz abzutrennen.

Wichtig im Zusammenhang mit der Erkennung von Fehlern in Energieversorgungsnetzen ist neben der Frage, ob überhaupt ein Fehler aufgetreten ist, beispielweise auch die Frage nach einer Fehlerart des Fehlers und einem Fehlerort. Eine Fehlerart charakterisiert den vorliegenden Fehler konkreter und gibt beispielsweise an, in welcher möglichen Fehlerschleife des mehrphasigen Energieversorgungsnetzes und/oder in welcher Richtung von der Messstelle aus gesehen der Fehler vorliegt. Bei einem dreiphasigen Energieversorgungsnetz mit drei Leitern (Leiter 1, Leiter 2, Leiter 3) existieren abhängig von den am Fehler beteiligten Leitern sieben mögliche Fehlerschleifen. Ein Fehlerort gibt die fehlerbehaftete Komponente und ggf. einen konkreten Fehlerort (z.B. Abstand bis zum Fehler auf einer Leitung) an.

Darüber hinaus können verschiedene Betriebszustände (Ereignisse) des Energieversorgungsnetzes eintreten, die nicht als Fehler erkannt werden dürfen und daher nicht zu einer Auslösung eines Schalters führen sollen. Solche Ereignisse können z.B. eine Inrush-Situation oder eine vorliegende Netzpendelung sein.

Die Entscheidung, ob ein Betriebszustand zulässig oder unzulässig ist, sowie eine genauere Einstufung eines unzulässigen Betriebszustands (z.B. durch Fehlerarterkennung und Fehlerortbestimmung) erreicht eine Schutzeinrichtung der bekannten Art üblicherweise durch kombinierte Ausführung mehrerer Schutzfunktionen, die auf unterschiedliche Analysen spezialisiert sind. Beispielsweise existieren Schutzfunktionen zur Erkennung einer Fehlerart, andere zur Erkennung einer Fehlerrichtung und wieder andere zur Bestimmung eines Fehlerortes.

Aufgrund jüngerer Entwicklungen im Bereich der Energieversorgungsnetze, beispielsweise die Liberalisierung der Stromerzeugungsmärkte und ein damit verbundenes Aufbrechen althergebrachter Stromübertragungsrichtungen im Energieversorgungsnetz durch dezentrale Stromeinspeisung, werden an Schutzeinrichtungen in Energieversorgungsnetzen immer höhere Anforderungen hinsichtlich ihrer Zuverlässigkeit und Selektivität gestellt, so dass eine flexible und adaptive Möglichkeit der Anpassung der jeweils verwendeten Schutzfunktionen zur Erkennung unzulässiger Betriebszustände benötigt wird. Die mittels der Schutzalgorithmen in der Schutzeinrichtung fest implementierte Funktionalität ist nachträglich jedoch nicht oder nur in engen Grenzen änderbar. Eine Adaption der Schutzeinrichtung an neue Gegebenheiten des Energieversorgungsnetzes ist nur durch Aufspielen einer neuen Gerätesoftware (Firmware) und eine entsprechende geänderte Konfiguration sowie ggf. durch Veränderung der Geräte-Hardware möglich.

Zudem existieren bestimmte Fehlerszenarien, die mit herkömmlichen Schutzeinrichtungen nur schwer erkannt werden können. Darunter fallen beispielsweise sogenannte hochohmige Erdfehler, bei denen der Übergangswiderstand an der Fehlerstelle so hoch ist (üblicherweise zwischen etwa 3 kOhm und 20 kOhm), dass nur sehr geringe Fehlerströme fließen.

Es ist zudem bekannt, einzelne Schutzalgorithmen durch separat trainierte neuronale Netze im Kontext eines Plug&Play Ansatzes zu ersetzen und in den bestehenden Schutzalgorithmus oder die bestehende Schutzlogik einzubetten. Solche Ansätze sind beispielsweise aus der DE 4433406 C1, der WO95/09463 A1, der DE 4333258 A1 und der WO95/09465 A1 bekannt. Bei den bekannten Ansätzen werden jeweils einzelne Schutzfunktionen durch ein speziell trainiertes neuronales Netz ersetzt, es entsteht daher eine Mischung aus Schutzfunktionen, die mittels klassischer Algorithmen ausgeführt werden, und solchen, die mittels eines neuronalen Netzes ausgeführt werden.

Eine weitere Schutzeinrichtung, die sich zur Erkennung eines Fehlertyps eines neuronalen Netzes bedient, ist zudem aus der EP 3 460 494 A1 bekannt.

Der vorliegenden Erfindung liegt die Aufgabe zugrunde, eine besonders flexible und zuverlässige Möglichkeit zur Erkennung unzulässiger Betriebszustände in Energieversorgungsnetzen anzugeben, die sich insbesondere auch zur Erkennung von Fehlerzuständen eignet, die mit herkömmlichen Schutzeinrichtungen nicht oder nur schwer erkannt werden können.

Diese Aufgabe wird erfindungsgemäß durch eine Schutzeinrichtung der eingangs genannten Art gelöst, wobei die Auswerteinrichtung dazu ausgebildet ist, zur Entscheidung über den Betriebszustand des Energieversorgungsnetzes eine Mustererkennung einer auf den Messwerten basierenden grafischen Darstellung heranzuziehen.

Der Erfindung liegt die Erkenntnis zugrunde, dass unter Verwendung grafischer Analysen und Auswertungen - also der Betrachtung einer zweidimensionalen Darstellung zur Charakterisierung eines Betriebszustands des Energieversorgungsnetzes - Fehler sehr effizient sowie mit großer Zuverlässigkeit und Geschwindigkeit erkannt und klassifiziert werden können. Dabei können auch Fehlerszenarien gelöst werden, die sich mit herkömmlichen Methoden, bei denen Messsignale quasi in einer eindimensionalen Darstellung (z.B. ein zeitlicher Verlauf eines Messsignals) betrachtet werden, nur schwer behandeln lassen.

Ein weiterer Vorteil der erfindungsgemäßen Lösung ist, dass die Schutzeinrichtung ohne zusätzliche Konfigurationseinstellungen auskommt und sich durch fortgesetztes Training auch an veränderte Gegebenheiten, z.B. durch verstärkten Netzausbau und dezentrale Einspeisungen, eigenständig anpassen kann.

Konkret kann gemäß einer vorteilhaften Ausführungsform der erfindungsgemäßen Schutzeinrichtung vorgesehen sein, dass das künstliche neuronale Netz eine Eingangs-Stufe aufweist, die zur grafischen Mustererkennung trainiert ist.

Bei dieser Lösung wird eine mehrstufige Architektur des neuronalen Netzes verwendet, wobei die Eingangs-Stufe auf die grafische Auswertung von zweidimensionalen Darstellungen spezialisiert ist. Gerade im Bereich der Bilderkennung ist die Technologie der künstlichen Intelligenz nämlich schon stark fortgeschritten, so dass hoch spezialisierte neuronale Netze vorhanden sind, die zur Mustererkennung komplexer Darstellungen geeignet sind. Mit einer entsprechend ausgebildeten Eingangs-Stufe können selbst kleinste Veränderungen und Auffälligkeiten in der grafischen Darstellung der Messwerte erkannt und von anderen Mustern unterschieden werden, so dass eine Klassifizierung von auffälligen Mustern und zugehörigen Fehlermerkmalen mit hoher Effizient und Genauigkeit erfolgen kann. "Zweidimensional" ist in diesem Sinne nicht - zumindest nicht ausschließlich - als flächige Ausdehnung der grafischen Darstellung zu verstehen, sondern bezieht sich vielmehr auf den Zusammenhang, dass mehrere Eigenschaften bzw. Informationen einer Messgröße gleichzeitig über einer anderen Größe, vorzugsweise der Zeit, aufgetragen und dargestellt werden.

Beim Training eines neuronalen Netzes werden Verfahren aus dem sogenannten "Deep Learning" eingesetzt. Hierbei lernt das neuronale Netz beispielsweise Filterparameter und/oder -gewichtungen, die zur Auswertung der grafischen Darstellung im Rahmen der Mustererkennung eingesetzt werden. Solche Filter erkennen beispielsweise Kanten in bestimmten Ausrichtungen (z.B. horizontal, vertikal, schräg) unter Bildung sogenannter Feature-Maps. Durch erneute Auswertung und Kombination entstehen durch Kombination sogenannter "Stacks" neue Feature-Maps mit komplexeren Formen (Dreiecke, Quadrate etc.). Somit kann die Eingangs-Stufe insbesondere ein entsprechend trainiertes neuronales Netz umfassen, das in mehreren Durchgängen eine grafische Darstellung auswertet.

In diesem Zusammenhang kann beispielsweise vorteilhaft vorgesehen sein, dass die Eingangs-Stufe ein gefaltetes neuronales Netz ("convolutional neural network" - CNN) umfasst.

Solche Arten neuronaler Netzwerke sind besonders für grafische Mustererkennung geeignet.

Gemäß einer vorteilhaften Ausführungsform kann zudem vorgesehen sein, dass die Eingangs-Stufe vor ihrem Einsatz in der Schutzeinrichtung zur Unterscheidung beliebiger grafischer Darstellungen vortrainiert worden ist.

Es wurde nämlich erfinderseitig erkannt, dass auf dem Gebiet der Bilderkennung bereits vorkonfektionierte, d.h. zur Unterscheidung beliebiger grafischer Darstellungen, z.B. von Tieren, Gegenständen, Gesichtern, Symbolen etc., vortrainierte neuronale Netze vorhanden sind. Solche vortrainierten neuronalen Netze sind bereits in den Grundzügen der grafischen Mustererkennung angelernt, besitzen beispielsweise entsprechend vorbelegte Filtergewichte, und müssen anschließend nur noch auf den speziellen Anwendungsfall der Mustererkennung von Betriebszuständen eines Energieversorgungsnetzes weitertrainiert werden. Damit kann die Dauer des Trainings signifikant verkürzt werden. Beispielsweise können solche vorkonfektionierten neuronale Netze über vorhandene umfassende Bilddatenbanken, wie z.B. "ImageNet" oder MS "COCO", angelernt worden sein.

Konkret kann erfindungsgemäß vorgesehen sein, dass die grafische Darstellung ein Spektrogramm ist.

Ein Spektrogramm, also in diesem Fall eine grafische Darstellung der zeitabhängigen Amplitude verschiedener Frequenzen der Messsignale sowie ihres Energiegehalts, kann besonders vorteilhaft als Grundlage einer Mustererkennung mittels der Auswerteinrichtung verwendet werden. Es konnte festgestellt werden, dass sich bestimmte Vorgänge im Energieversorgungsnetz (z.B. Lastbetrieb unter verschiedenen Lastbedingungen, Inrush-Vorgänge, Pendelvorgänge, Kurzschlüsse, niederohmige Erdschlüsse und hochohmige Erdschlüsse) in unterschiedlicher Weise im Spektrogramm der Messwerte niederschlagen und als unterschiedliche Muster mit der auf grafische Mustererkennung spezialisierten Auswerteinrichtung erkannt werden können. Dies kann auch bei kleinsten, mit dem Auge nicht wahrnehmbaren, Besonderheiten von Mustern durchgeführt werden.

In diesem Zusammenhang wird es zudem als vorteilhaft angesehen, wenn ein mittels einer Fourier-Transformation, insbesondere einer Digitalen Kurzzeit-Fouriertransformation, erzeugtes Spektrogramm verwendet wird.

Hierbei wird für kurze Zeitfenster (ca. 20-700ms Länge) zeitlicher Verläufe der aufgenommenen Messwerte jeweils mittels einer Fourier-Transformation ein Teilabschnitt eines Spektrogramms berechnet. Die Frequenzantworten der jeweiligen Zeitfenster werden nebeneinander auf der X-Achse des Spektrogramms aufgetragen, wobei die einzelnen harmonischen Frequenzen der durch die Messwerte angegebenen Signale auf der Y-Achse aufgetragen werden. Je nach Anwendungsfall kann ein solches Spektrogramm startend von der Grundfrequenz bis hin zu hohen Frequenzen (z.B. bis zu 7kHz) erzeugt werden.

Als eine weitere vorteilhafte Ausführungsform der erfindungsgemäßen Schutzeinrichtung wird angesehen, dass die Schutzeinrichtung eine Messwerterfassungseinrichtung zum Erfassen der Messwerte und ein Vorverarbeitungsmodul umfasst, das dazu ausgebildet ist, die grafische Darstellung auf Basis der erfassten Messwerte zu erzeugen.

In diesem Fall kann die Vorverarbeitung der Messwerte zur Erzeugung der grafischen Darstellung direkt in der Schutzeinrichtung erfolgen. Im Falle einer grafischen Darstellung in Form eines Spektrogramms wird dieses von dem Vorverarbeitungsmodul auf Basis der Messwerte, beispielsweise mittels einer Fouriertransformation, erzeugt werden.

Gemäß einer weiteren vorteilhaften Ausführungsform der erfindungsgemäßen Schutzeinrichtung ist vorgesehen, dass an die Eingangs-Stufe eine Weiterverarbeitungs-Stufe anschließt, die zur Untersuchung eines zeitlichen Verhaltens von an der Weiterverarbeitungs-Stufe anliegenden Daten ausgebildet ist.

Auf diese Weise kann neben einer Momentaufnahme eines sich in der grafischen Darstellung niederschlagenden Zustands des Energieversorgungsnetzes auch dessen zeitliche Entwicklung betrachtet werden, wodurch eine höhere Genauigkeit und Zuverlässigkeit bei der Unterscheidung einzelner Betriebszustände ermöglicht wird.

Konkret kann beispielsweise vorgesehen sein, dass die Weiterverarbeitungs-Stufe zumindest teilweise als rekurrentes neuronales Netz ausgebildet ist.

Gemäß einer weiteren vorteilhaften Ausführungsform der erfindungsgemäßen Schutzeinrichtung ist vorgesehen, dass das neuronale Netz eine Ausgabe-Schicht und zumindest eine Zwischenausgabe-Schicht umfasst, wobei die Ausgabe-Schicht und jede Zwischenausgabe-Schicht zur Ausgabe eines spezifischen Ergebnisses hinsichtlich des Betriebszustands des Energieversorgungsnetzes eingerichtet sind.

Auf diese Weise können unterschiedliche Informationen über einen etwaigen vorliegenden Fehler im Energieversorgungsnetz ermittelt und ausgegeben werden, indem unterschiedliche Schichten des neuronalen Netzes auf die Erkennung und Klassifizierung solcher Informationen trainiert werden. Somit können quasi Zwischenergebnisse der Klassifizierung des Betriebszustands an verschiedenen Schichten des neuronalen Netzes abgegriffen werden. Dies erhöht zudem die Transparenz und damit die Vertrauenswürdigkeit der finalen Entscheidung über den Betriebszustand, da sichtbar ist, auf welchen Einzelentscheidungen die Klassifizierung des Betriebszustands beruht.

In diesem Zusammenhang kann beispielsweise vorgesehen sein, dass als spezifische Ergebnisse zumindest zwei der folgenden Informationen ausgegeben werden: eine Information über das Vorhandensein eines Fehlers, eine Information zur Angabe eine fehlerbehafteten Phase, eine Information über eine Richtung, in der ein Fehler bezüglich der zumindest einen Messstelle liegt, eine Information zur Angabe einer fehlerbehafteten Leitung und/oder eine Information über einen Fehlerort, an dem ein Fehler im Energieversorgungsnetz aufgetreten ist.

Auf diese Weise werden mit dem neuronalen Netz die wesentlichen Entscheidungen getroffen, die eine Klassifizierung eines Betriebszustands betreffen und ggf. eine genaue Einordnung eines Fehlers bzw. anderer Ereignisse ermöglichen. Als Fehler werden in diesem Zusammenhang beispielsweise ein Kurzschluss, ein Erdschluss bzw. als andere Ereignisse ein Inrushvorgang, eine Lastschaltung oder eine Pendelung angesehen. Nicht in allen Fällen ist eine Abschaltung eines Teils des Energieversorgungsnetzes erforderlich, z.B. sollen bei Inrushvorgängen und gedämpften Pendelungen der Betrieb des Energieversorgungsnetzes aufrechterhalten und eine Abschaltung blockiert werden.

Mittels des neuronalen Netzes kann auch eine Fehlerart angegeben werden. Als Beschreibung einer Fehlerart wird insbesondere eine Aussage über die fehlerbehaftete(n) Schleife(n) angesehen. Folgende Schleifen können in einem Dreiphasensystem von einem Fehler betroffen sein:

| | |
|---|---|
| Einpoliger Fehler Leiter 1 - Erde: | L1E; |
| Einpoliger Fehler Leiter 2 - Erde: | L2E; |
| Einpoliger Fehler Leiter 3 - Erde: | L3E; |
| Zweipoliger Fehler Leiter 1 - Leiter 2: | L12; |
| Zweipoliger Fehler Leiter 2 - Leiter 3: | L23; |
| Zweipoliger Fehler Leiter 3 - Leiter 1: | L31; |

Bei einem dreipoligen Fehler sind zudem alle oben genannten Schleifen beteiligt. Daneben kann bei mehrpoligen Fehlern unterschieden werden, ob diese mit oder ohne Erdberührung auftreten.

Eine Angabe des Fehlerortes kann beispielsweise die Angabe der fehlerbehafteten Primärkomponente, z.B. einer von einem Kurzschluss betroffenen Leitung, beinhalten. Daneben können weitere Informationen ermittelt und ausgegeben werden, die die Entscheidung über den Betriebszustand des Energieversorgungsnetzes konkretisieren. So kann beispielsweise der Fehlerort durch die Angabe eines Abschnittes auf der fehlerbehafteten Leitung konkretisiert werden, der z.B. in Prozent der Leitungslänge denjenigen Abschnitt angibt, auf dem der Fehler aufgetreten ist (z.B. bis 20% der Leitungslänge).

Die erfindungsgemäße Schutzeinrichtung ist aufgrund der adaptiven Ausgestaltung mit einer Auswerteinrichtung in Form eines neuronalen Netzes höchstgradig skalierbar ausgestaltet. Dies bedeutet, dass sie sowohl in einer dezentralen Schutzarchitektur als auch in einer zentralen Schutzarchitektur und in jeder beliebigen Zwischenstufe eingesetzt werden kann.

Entsprechend wird eine weitere vorteilhafte Ausführungsform der erfindungsgemäßen Schutzeinrichtung darin gesehen, dass die Schutzeinrichtung zum lokalen Betrieb an einem Einbauort in der Nähe der Messstelle eingerichtet ist und eine Kommandoeinrichtung zur Ausgabe von Steuerbefehlen an Schalteinrichtungen des Energieversorgungsnetzes aufweist.

In diesem Fall kann die Schutzeinrichtung beispielsweise als lokales Schutzgerät, z.B. ein Schutzgerät der SIPROTEC Schutzgerätefamilie der Anmelderin, ausgebildet sein. Hierdurch können eine komplett dezentrale Schutzarchitektur sowie eine teilweise dezentrale Schutzarchitektur ausgestaltet werden. Eine komplett dezentrale Schutzarchitektur umfasst einzelne Schutzeinrichtungen, die in üblicher Weise nah an einer Messstelle angeordnet sind und bei der Überwachung des Energieversorgungsnetzes mit anderen Schutzeinrichtungen interagieren müssen. Bei einer teilweise dezentralen Schutzarchitektur werden weitere Messstellen hinzugenommen, die ebenfalls von der Schutzeinrichtung ausgewertet werden. Die Hinzunahme kann auf z.B. mehrere Abgänge einer Station zusammenfassen oder auf Stations- oder auf Regionenebene erfolgen.

Konkret kann in diesem Zusammenhang vorgesehen sein, dass die Schutzeinrichtung spezifisch auf den Einsatz an ihrem Einbauort trainiert ist. Damit kann dem unterschiedlichen Verhalten von Messgrößen, wie beispielsweise Strom und Spannung, an verschiedenen Stellen des Energieversorgungsnetzes Rechnung getragen werden. Außerdem kann vorgesehen sein, dass die Schutzeinrichtung eine Kommunikationsschnittstelle zur Verbindung mit einer übergeordneten Leitstelle und zum Empfang von Parametern zur Kalibrierung des neuronalen Netzes aufweist. Obwohl die Schutzeinrichtung bei dezentralem Betrieb aufgrund der flexiblen Anpassung des neuronalen Netzes an unterschiedliche Betriebsszenarien ohne Kommunikation mit anderen Schutzeinrichtungen auskommt, stellt eine solche Kommunikationsschnittstelle eine geeignete Möglichkeit dar, um die Schutzeinrichtung bedarfsweise von der Leitstelle mit geänderten Konfigurationen des neuronalen Netzes zu versehen. Beispielsweise können solche geänderten Konfigurationen Kantengewichte des neuronalen Netzes enthalten, mit denen sich, z.B. nach einer Topologieänderung des Energieversorgungsnetzes (z.B. aufgrund von Schaltvorgängen und/oder Netzausbau), das Verhalten des neuronalen Netzes an eine neue Situation anpassen lässt.

Gemäß einer alternativen Ausführungsform kann jedoch auch vorgesehen sein, dass die Schutzeinrichtung eine zentrale Schutzeinrichtung ist, die dazu eingerichtet ist, von Sensoren an mehreren Messstellen des Energieversorgungsnetzes Messwerte zu empfangen und Schalteinrichtungen an mehreren Stellen des Energieversorgungsnetzes anzusteuern.

Alternativ zur dezentralen Schutzarchitektur kann nämlich auch eine zentrale Schutzarchitektur ermöglicht werden. Die Schutzeinrichtung ist dann z.B. in Form eines zentralen Schutzgerätes oder in Form einer Datenverarbeitungseinrichtung in einer Leitstelle oder in Form eines Cloudcomputing-Systems ausgebildet und mit Sensoren und Aktoren bzw. Schaltern im Energieversorgungsnetz über geeignete Kommunikationsverbindungen verbunden.

Die oben genannte Aufgabe wird auch durch ein Verfahren zum Überwachen eines elektrischen Energieversorgungsnetzes gelöst, bei dem an zumindest einer Messstelle des Energieversorgungsnetzes Messwerte erfasst werden, die einen elektrischen Zustand des Energieversorgungsnetzes an der Messstelle angeben, die Messwerte an eine Schutzeinrichtung übermittelt werden und unter Verwendung der Messwerte mittels einer Auswerteinrichtung der Schutzeinrichtung eine Entscheidung getroffen wird, ob sich das Energieversorgungsnetz in einem zulässigen oder einem unzulässigen Betriebszustand befindet, wobei die Auswerteinrichtung ein neuronales Netz umfasst.

Erfindungsgemäß ist vorgesehen, dass die Auswerteinrichtung zur Entscheidung über den Betriebszustand des Energieversorgungsnetzes eine Mustererkennung einer auf den Messwerten basierenden grafischen Darstellung heranzieht.

Hinsichtlich des erfindungsgemäßen Verfahrens gelten alle zu der erfindungsgemäßen Schutzeinrichtung voranstehend und nachfolgend gemachten Ausführungen und umgekehrt in entsprechender Weise, insbesondere ist die erfindungsgemäße Schutzeinrichtung zur Durchführung des erfindungsgemäßen Verfahrens in jeder beliebigen Ausführungsform oder einer Kombination beliebiger Ausführungsformen eingerichtet. Auch hinsichtlich der Vorteile des erfindungsgemäßen Verfahrens wird auf die zu der erfindungsgemäßen Schutzeinrichtung beschriebenen Vorteile verwiesen.

Schließlich wird die Aufgabe auch durch ein Computerprogrammprodukt gelöst, umfassend Befehle, die bei der Ausführung des Programms durch eine Datenverarbeitungseinrichtung diesen dazu veranlassen, das oben genannte Verfahren auszuführen.

Das Computerprogrammprodukt kann hierbei durch einen mobilen Datenspeicher (z.B. eine Diskette, CD-Rom, DVD, eine Speicherkarte, ein USB-Stick, eine Festplatte) gebildet sein, der mit der Schutzeinrichtung datentechnisch verbunden wird oder als Datei in einem in der Schutzeinrichtung fest installierten Datenspeicher realisiert sein und Programmanweisungen einer Gerätesoftware oder einer Firmware umfassen. Das Computerprogrammprodukt kann auch eine Datei umfassen, die in einem Datentransferprozess an die Schutzeinrichtung übertragen und dort abgespeichert wird.

Die Erfindung wird nachfolgend anhand eines Ausführungsbeispiels näher erläutert. Die spezifische Ausgestaltung des Ausführungsbeispiels ist für die allgemeine Ausgestaltung des erfindungsgemäßen Verfahrens und der erfindungsgemäßen Einrichtung in keiner Weise einschränkend zu verstehen; vielmehr können einzelne Ausgestaltungsmerkmale des Ausführungsbeispiels in beliebiger Weise frei untereinander und mit den voranstehend beschriebenen Merkmalen kombiniert werden.

Hierzu zeigen
- Figur 1: eine schematische Darstellung eines Energieverteilungsnetzes, in dem eine erfindungsgemäße Schutzeinrichtung eingesetzt werden kann;
- Figur 2: eine schematische Darstellung eines Teils eines Energieverteilungsnetzes mit einer zentralen Schutzeinrichtung;
- Figur 3: eine schematische Darstellung eines Teils eines Energieverteilungsnetzes mit einer lokalen Schutzeinrichtung;
- Figur 4: eine schematische Darstellung einer Schutzeinrichtung mit einem neuronalen Netz;
- Figur 5: eine beispielhafte Darstellung einer auf Messwerten basierenden grafischen Darstellung in Form eines Spektrogramms;
- Figur 6: eine Darstellung einer beispielhaften Auswerteinrichtung einer Schutzeinrichtung;
- Figur 7: ein beispielhaftes Ablaufschema eines Verfahrens zur Beurteilung eines Betriebszustands eines neuronalen Netzes; und
- Figur 8: Beispiele A-C von Spektrogrammen unterschiedlicher Betriebszustände eines elektrischen Energieversorgungsnetzes.

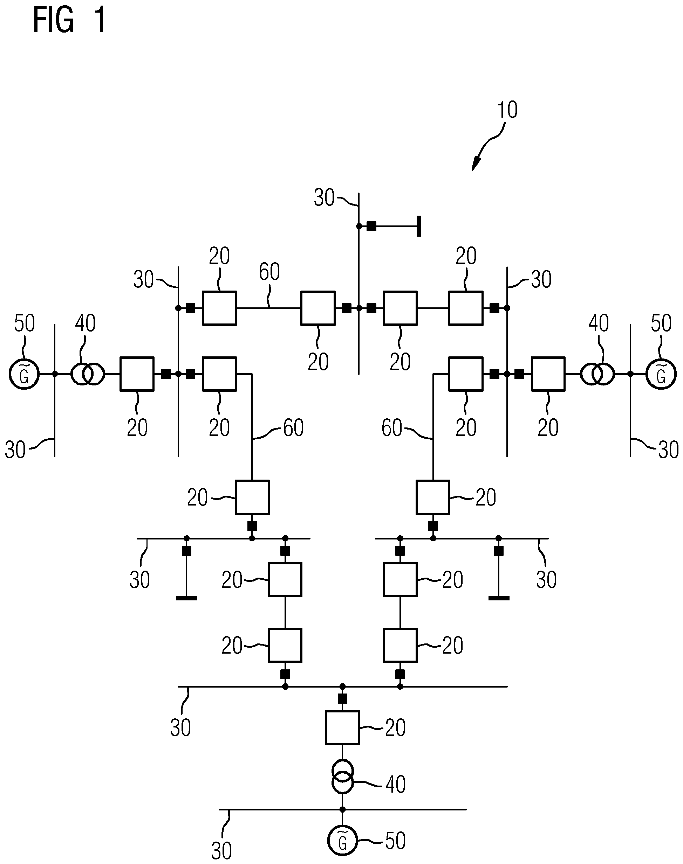

Figur 1 zeigt ein Schaltbild eines beispielhaften Energieversorgungsnetzes 10 mit mehreren Sammelschienen 30, die über Leitungen 60 miteinander verbunden sind. Die Leitungen 60 sind an ihren Enden jeweils über nicht näher bezeichnete Schalteinrichtungen (ausgefüllte schwarze Kästen) begrenzt.

Außerdem sind mit dem Energieversorgungsnetz 10, vorzugsweise über Transformatoren 40, Energieerzeuger 50 verbunden.

Mit Messeinrichtungen 20 werden an verschiedenen Messstellen im Energieversorgungsnetz 10 Messwerte erfasst, die dazu geeignet sind, den Betriebszustand des Energieversorgungsnetzes an der jeweiligen Messstelle anzugeben. Solche Messwerte können beispielsweise Ströme, Spannungen, Frequenzen, Leistungen, Impedanzen, Temperaturen etc. sein.

Anhand der Messwerte können eine oder mehrere Schutzeinrichtungen eine Entscheidung über den Betriebszustand des elektrischen Energieversorgungsnetzes 10 treffen und etwaige Fehler abschalten. Dies kann in einer zentralen Struktur mit einer Schutzeinrichtung, die mit mehreren oder allen Messstellen verbunden ist, oder in einer dezentralen Struktur mit lokalen Schutzeinrichtungen erfolgen, die in der Nähe der jeweiligen Messstellen angeordnet sind. Eine Besonderheit des realisierbaren Lösungsansatzes liegt somit in seiner Skalierbarkeit der Dezentralität bzw. Zentralität. Dadurch sind Ausprägungen von dezentralen Schutzinstanzen bis hin zur zentralen Schutzinstanz und sämtlichen denkbaren Zwischenstufen nach dem gleichen Prinzip zu realisieren.

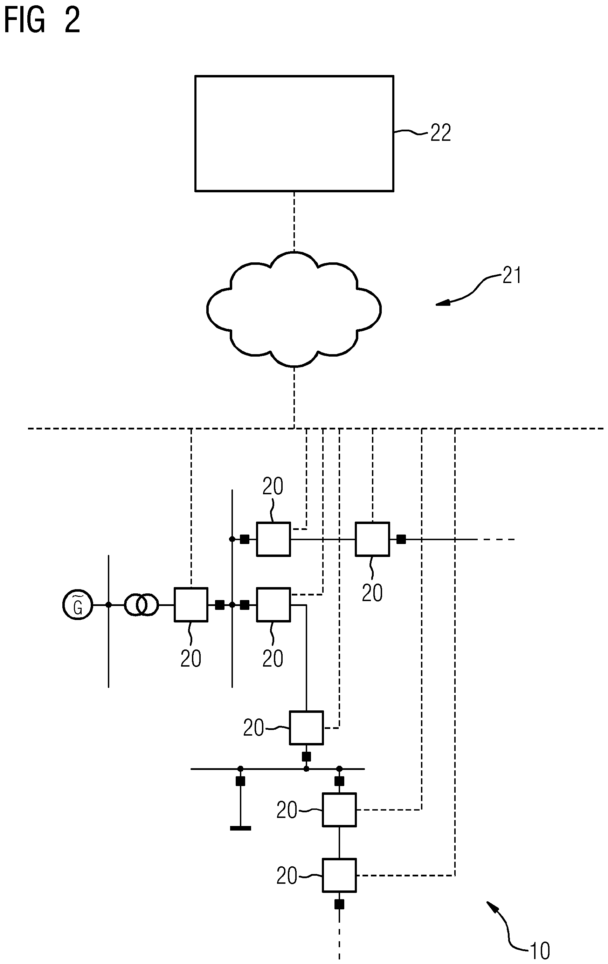

Figur 2 zeigt beispielhaft einen Aufbau einer zentralen Schutzarchitektur. Das in Figur 2 nur teilweise gezeigte Energieversorgungsnetz 10 weist Messeinrichtungen 20 an mehreren Messstellen auf. Die Messeinrichtungen 20 nehmen an den Messstellen im Energieversorgungsnetz 10 Messwerte auf und übermitteln diese über eine Kommunikationsverbindung 21 an eine zentrale Schutzeinrichtung 22. In dem in Figur 2 dargestellten Beispiel ist die Kommunikationsverbindung 21 durch einen Kommunikationsbus und ein Netzwerk (z.B. ein LAN, WAN oder das Internet) realisiert. Davon abweichend kann selbstverständlich jede Ausprägung einer kabelgebundenen oder drahtlosen Kommunikationsverbindung vorhanden sein.

Die Erfassung der Messwerte erfolgt in einer solchen zentralen Struktur folglich an mehreren Messtellen im Energieversorgungsnetz 10. Die Messwerterfassung kann damit z.B. an mehreren Abzweigen und/oder Leitungsenden erfolgen.

Als Messeinrichtungen 20 können sogenannte Fernwirkgeräte (RTU - Remote Terminal Unit) verwendet werden. Bevorzugt können auch sogenannte "Merging-Units" eingesetzt werden, die die Messwerte erfassen, digitalisieren und beispielsweise über das Protokoll IEC61850 an die zentrale Schutzeinrichtung 22 übertragen. Die Abtastrate für die Bildung der Messwerte sollte ausreichend hoch (je nach Anwendung z.B. min. 14,4 kHz) gewählt werden. Wenn die zentrale Schutzeinrichtung 22 einen unzulässigen Betriebszustand im Energieversorgungsnetz 10 feststellt, überträgt sie ein Auslösesignal an eine oder mehrere der Schalteinrichtungen, um den fehlerbehafteten Abschnitt vom restlichen Energieversorgungsnetz 10 abzutrennen.

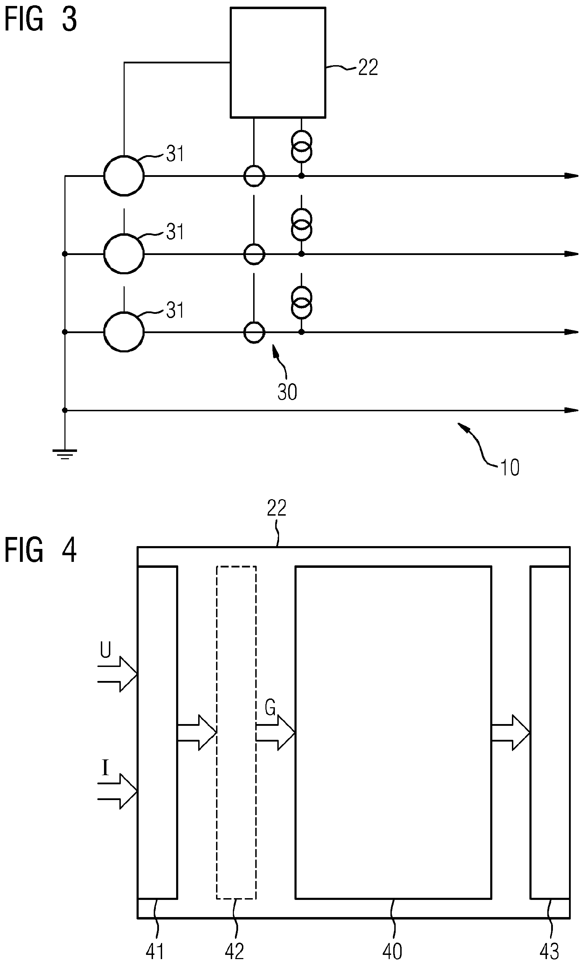

Alternativ zu einer zentralen Struktur kann auch eine dezentrale Struktur eingesetzt werden, wie sie beispielhaft in Figur 3 dargestellt ist. Hierzu zeigt Figur 3 einen Abschnitt eines Energieversorgungsnetzes 10; beispielweise kann es sich hierbei um einen Abzweig einer dreiphasigen Leitung handeln. An einer Messstelle 30 werden mit Sensoren (z.B. schematisch angedeuteten Strom- und Spanungswandlern) Messwerte erfasst und einer Schutzeinrichtung 22 zugeführt. Um eine möglichst gute Abbildung auch hochfrequenter Vorgänge zu ermöglichen, sollte die Abtastfrequenz ausreichend hoch (je nach Anwendung z.B. min. 14.4 kHz) gewählt werden. Falls die Schutzeinrichtung 22 anhand der Messwerte einen unzulässigen Betriebszustand, z.B. einen Kurzschluss oder Erdschluss, feststellt, kann die Schutzeinrichtung 22 die Leitung mittels Schalteinrichtungen 31 abschalten. Dazu überträgt sie im Fehlerfall ein Auslösesignal an die Schalteinrichtungen 31.

Obwohl die in Figur 3 dargestellte Schutzeinrichtung 22 dazu trainiert ist, eigenständig ihre Schutzfunktion auszuführen, ohne auf die Kommunikation mit anderen Schutzeinrichtungen angewiesen zu sein, kann sie unter Verwendung einer optionalen Kommunikationsschnittstelle über eine temporäre Kommunikationsmöglichkeit zu einer übergeordneten Instanz verfügen, die eine Anpassung der Kantengewichte der später beschriebenen neuronalen Netze vornehmen kann. Dies dient z.B. dazu, dass bei Änderungen der Topologie des elektrischen Energieversorgungsnetzes 10 eine Anpassung der jeweiligen neuronalen Netze an die aktuelle Situation ermöglicht wird. Die Klassifizierung des aktuellen Betriebszustands des Energieversorgungsnetzes und eine etwaige im Fehlerfall damit verbundene Auslöseentscheidung der Schutzeinrichtung 22 wird im Normalfall ohne die Verwendung einer Kommunikationsverbindung getroffen und obliegt dem lokal gespeicherten neuronalen Netz, welches zuvor in einem Trainingsprozess an die individuellen Gegebenheiten des jeweiligen Einbauortes der Schutzeinrichtungen 22 angepasst wurde.

Sowohl beim zentralen als auch beim dezentralen Ansatz umfasst die Schutzeinrichtung 22 mindestens ein zur Auswertung von Messwerten trainiertes neuronales Netz, mit dem eine Aussage über den Betriebszustand des Energieversorgungsnetzes 10 getroffen wird. Ein Beispiel einer Schutzeinrichtung 22 ist in Figur 4 dargestellt.

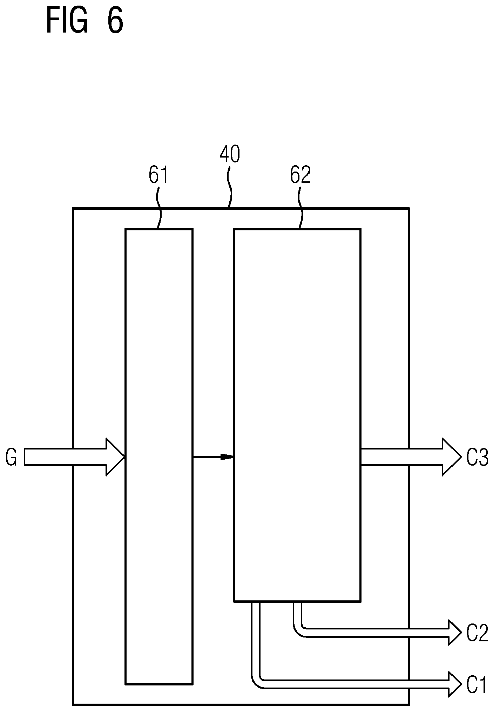

Die beispielhafte Schutzeinrichtung 22 weist eine Auswerteinrichtung 40 auf, die zumindest teilweise als neuronales Netz ausgebildet ist. Dies wird im Zusammenhang mit Figur 6 eingehender erläutert. Der Schutzeinrichtung 22 werden eingangsseitig über eine Messerfassungseinrichtung 41 Messwerte, z.B. Ströme I und/oder Spannungen U, zugeführt. Die Messwerte können hierbei als analoge Signale bereitgestellt werden und in der Messerfassungseinrichtung 41 abgetastet und digitalisiert werden. Alternativ kann eine Abtastung und Digitalisierung auch schon vor der Übertragung an die Schutzeinrichtung 22 erfolgen. Dies kann beispielsweise mittels einer sogenannten Merging Unit durchgeführt werden. Eine Übertragung der Messwerte von der Merging Unit an die Schutzeinrichtung 22 kann z.B. mittels des Protokolls IEC 61850 durchgeführt werden.

Die Messwerte können nach ihrer Erfassung durch die Messerfassungseinrichtung 41 optional einem Vorverarbeitungsmodul 42 zugeführt werden, in dem basierend auf den Messwerten eine grafische Darstellung G erzeugt wird. Bei der Schutzeinrichtung 22 werden dem neuronalen Netz nämlich nicht die Messwerte (z.B. Strom- und Spannungswerte) als Eingangssignal zugeführt. Vielmehr findet die Auswertung der Messwerte - zumindest teilweise - auf Basis einer auf ihnen basierenden grafischen Darstellung G statt.

Das Vorverarbeitungsmodul kann alternativ auch Bestandteil der Messerfassungseinrichtung 41 sein. Weiter alternativ kann die Erzeugung der grafischen Darstellung auch außerhalb der Schutzeinrichtung 22 erfolgen, wobei in diesem Fall die grafische Darstellung anstelle der Messwerte an die Schutzeinrichtung 22 übertragen wird.

Zum Anlernen bzw. Training des neuronalen Netzes können folgende Möglichkeiten eingesetzt werden: Zum einen kann ein einmaliges Anlernen des neuronalen Netzes mit Hilfe von Daten stattfinden, die einerseits aus realen Netzen, z.B. mit Hilfe von Störschreibern, und andererseits aus digitalen Netzmodellen gewonnen wurden. Diese Netzmodelle sollten so allgemein gehalten werden, dass eine spezielle Anpassung an die jeweilige Netztopologie und die lokalen Gegebenheiten nicht erforderlich ist. Zum anderen kann ein Anlernen des neuronalen Netzes durch Erfassung von Daten aus dem Energieversorgungsnetz des jeweiligen Anwenders und aus einem digitalen Netzmodell erfolgen, welches dem Verteilnetz des Anwenders möglichst genau entspricht.

Die Messwerte, z.B. Strom- und Spannungssignale, werden zum Training beispielsweise von einem Störschreiber erfasst oder aus dem jeweiligen digitalen Netzmodell generiert und in digitaler Form dateibasiert zum Training bereitgestellt. Sowohl für das Training als auch zum Validieren und Testen des Systems werden Annotationen benötigt, welche Auskunft darüber geben, in welchem Zustand sich das elektrische Netz gerade befindet. Mögliche Zustände sind unter anderem "Lastbetrieb", "Kurzschluss", "Inrush", oder "Hochohmiger Erdschluss". Diese Label werden jeweils von Experten generiert und dem Machine Learning System zum Training des neuronalen Netzes bereitgestellt.

Die auf den Messwerten basierende grafische Darstellung G kann vorzugsweise pro Phase separat für jede Messgröße (z.B. eine Strom-Darstellung und/oder eine Spannungs-Darstellung) und für jede Messstelle erzeugt werden.

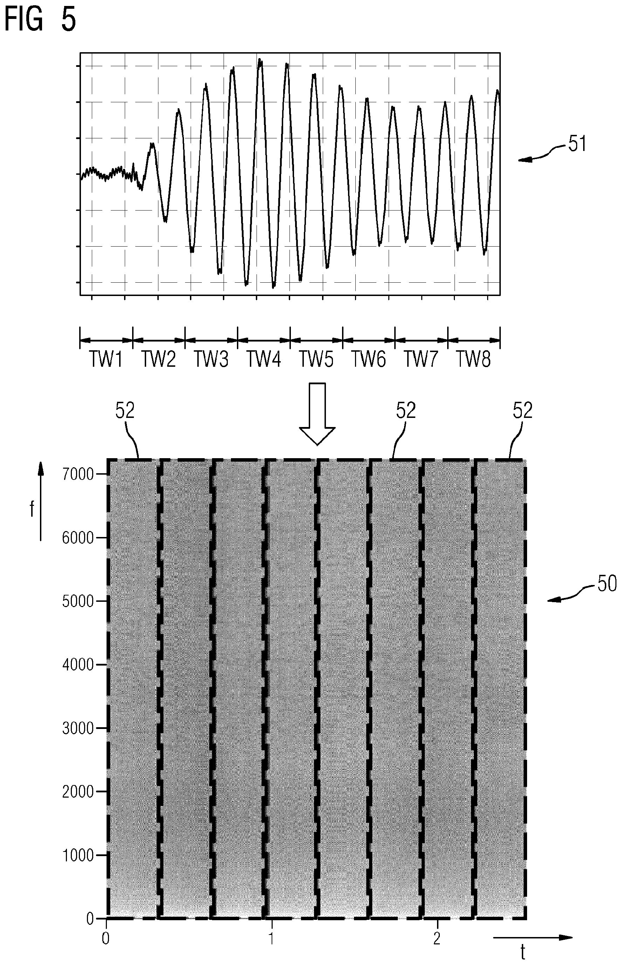

Als bevorzugte Ausführungsform einer solchen grafischen Darstellung wird ein auf den Messwerten basierendes Spektrogramm verwendet. Ein Beispiel eines solchen Spektrogramms 50 ist in Figur 5 gezeigt, wo die einzelnen harmonischen Frequenzen f der Eingangssignale der Messwerte (z.B. der Strom- und/oder Spannungssignale) auf der Y-Achse über der Zeit t auf der X-Achse aufgetragen sind.

Ein solches Spektrogramm 50 kann erzeugt werden, indem als Vorverarbeitungsschritt auf einen Verlauf von Messwerten, beispielhaft zeigt Figur 5 einen Verlauf 51 von Stromwerten, eine Transformation in den Frequenzbereich, insbesondere eine Digitale Kurzzeit-Fourier Transformation, angewandt wird. Konkret wird hierzu auf kurzen Zeitfenstern TW1-8 des jeweiligen Verlaufs der Messwerte in bekannter Weise eine Fourier Transformation berechnet. Die Messfenster können beispielsweise eine Länge von 20-700 ms aufweisen. Aus den transformierten Daten des Frequenzraumes wird anschließend das gewünschte Spektrogramm 50 erzeugt. Dies geschieht, indem die Frequenzantworten 52 der jeweiligen Zeitfenster nebeneinander auf der X-Achse aufgetragen werden. Aus den eindimensionalen zeitdiskreten Strom- und Spannungssignalen werden auf diese Weise zweidimensionale Signale im Frequenzraum. Vorteilhaft an dieser Art der Vorverarbeitung der Messwerte ist, dass Unterschiede zwischen einem normalem Betrieb des Energieversorgungsnetzes einerseits und einem unzulässigen Betriebszustand (z.B. Kurzschlüsse, Erdschlüsse) andererseits sich insbesondere im Frequenzraum abbilden und somit leichter erkennen lassen. Außerdem sind die Möglichkeiten der zweidimensionalen Bildanalyse mittels neuronaler Netze aufgrund der vorhandenen Werkzeuge im Deep Learning Kontext denen der eindimensionalen Signalanalyse für diesen Zweck überlegen. Zur Erzeugung des Spektrogramms können zudem digitale Filter (z.B. Pre-Emphasis Filter, Triangular Filter) eingesetzt werden.
Die auf den Messwerten basierende grafische Darstellung G, beispielsweise ein wie erläutert erzeugtes Spektrogramm, wird eingangsseitig der Auswerteinrichtung 40 (vgl. Figur 4) präsentiert und von dieser hinsichtlich der Erkennung des Betriebszustands des Energieversorgungsnetzes 10 ausgewertet. Hierzu greift die Auswerteinrichtung auf eine künstliche Intelligenz zurück, die ein oder mehrere neuronale Netze aufweist, und ausgangsseitig ein oder mehrere Werte zur Klassifizierung des Betriebszustands des Energieversorgungsnetzes abgibt. Daraus leitet die Auswerteinrichtung 40 eine Information über den aktuellen Betriebszustand des Energieversorgungsnetzes ab. Eine solche Information kann beispielsweise die folgenden Teilinformationen über spezifische Ereignisse umfassen:
- eine Information über das Vorhandensein eines Fehlers (und/ oder eines fehlerfreien Betriebs);
- eine Information zur Angabe einer fehlerbehafteten Phase;
- eine Information über eine Richtung, in der ein Fehler bezüglich der zumindest einen Messstelle liegt;
- eine Information zur Angabe einer fehlerbehafteten Leitung; und/oder
- eine Information über einen Fehlerort, an dem ein Fehler im Energieversorgungsnetz aufgetreten ist.

Die Auswerteinrichtung 40 der Schutzeinrichtung 22 entscheidet zusätzlich darüber, ob ein etwaiger erkannter fehlerbehafteter Betriebszustand Maßnahmen zu seiner Beseitigung erfordert. Solche Maßnahmen können z.B. die Meldung des Fehlers an Betriebspersonal des Energieversorgungsnetzes und/oder das Auslösen einer oder mehrerer Schalteinrichtungen im Energieversorgungsnetz sein.

Zur Umsetzung der nötigen Maßnahmen erzeugt die Schutzeinrichtung 22 mittels eines Ausgabemoduls 43 entsprechende Ausgangssignale, z.B. ein Telegramm zur Meldung des Vorhandenseins eines unzulässigen Betriebszustands und/oder ein Auslösesignal für eine Schalteinrichtung. Hierzu kann das Ausgabemodul entsprechende Mittel zur Kommunikation und Übertragung der Ausgangssignale aufweisen.

Figur 6 zeigt die Auswerteinrichtung 40 der Schutzeinrichtung 22 in detaillierterer Darstellung. Wie bereits zu Figur 4 erwähnt, wird der Auswerteinrichtung 40 eingangsseitig die auf den Messwerten basierende grafische Darstellung G zugeführt. Die Auswerteinrichtung 40 umfasst gemäß dem in Figur 6 gezeigten Ausführungsbeispiel eine Anordnung neuronaler Netze. Für eine bestmögliche Erkennung der einzelnen Vorgänge im Verlauf der Messwerte wird auf eine Kombination aus mehreren Technologien des Deep Learnings gesetzt. Hierzu weist die Auswerteinrichtung eine Eingangsstufe 61 auf, die durch ein gefaltetes neuronales Netz ("convolutional neural network") gebildet wird. Die Eingangsstufe ist speziell auf die Auswertung grafischer Darstellungen trainiert, konkret auf grafische Darstellungen, die auf Messwerten eines elektrischen Energieversorgungsnetzes beruhen und einen Betriebszustand des Energieversorgungsnetzes angeben, und erkennt charakteristische Muster, die unterschiedliche Betriebszustände eindeutig angeben. Beispielsweise können bestimmte Muster auf ein normales Lastverhalten des Energieversorgungsnetzes in unterschiedlichen Lastabstufungen hindeuten. Andere Muster geben sogenannte Inrush-Zustände oder Netzpendelungen an.

Wieder andere Muster charakterisieren Fehler wie Kurzschlüsse oder Erdschlüsse, wobei insbesondere auch solche Fehler erkannt werden können, die mit herkömmlichen Schutzalgorithmen nicht oder nur schwer identifiziert werden können. Solche Fehlerzustände liegen beispielsweise bei hochohmigen Erdfehlern vor. Durch die auf der grafischen Darstellung aufsetzende Mustererkennung mittels eines auf Bildverarbeitung trainierten neuronalen Netzes können einzelne Betriebszustände eindeutiger voneinander unterschieden werden als bei einer auf einzelnen eindimensionalen Signalverläufen aufsetzenden Signalanalyse.

Die Eingangsstufe 61 gibt ausgangsseitig eine Klassifizierung des jeweiligen Betriebszustands anhand der grafischen Auswertung aus und übergibt diese an eine Weiterverarbeitungsstufe 62, die ein weiteres neuronales Netz umfasst, das auf eine zeitliche Auswertung der Eingangssignale spezialisiert ist. Bei dem weiteren neuronalen Netz kann es sich beispielsweise um ein rekurrentes neuronales Netz handeln.

Die Weiterverarbeitungsstufe 62 setzt die Ergebnisse der Eingangsstufe 61 in einen zeitlichen Zusammenhang. Auf diese Weise können Betriebszustände erkannt werden, die sich durch eine charakteristische zeitliche Entwicklung bzw. ein charakteristisches zeitliches Verhalten auszeichnen. Dazu zählen beispielsweise Pendelvorgänge oder intermittierende Fehler. Auch Betriebszustände, die sich nur langsam entwickeln oder deren Abweichungen vom Normalzustand sich nur durch kleine Veränderungen abbilden können auf diese Weise eindeutiger und zuverlässiger erkannt werden.

Die Kombination aus je einem auf Bildverarbeitung und einem auf zeitliche Zusammenhänge spezialisierten neuronalen Netz erlaub es in vorteilhafter Weise, Betriebszustände von Energieversorgungsnetzen erkennen und voneinander unterscheiden zu können, die mit herkömmlichen Auswertungsmethoden nur mit hohem Aufwand erkannt werden können.

Die Weiterverarbeitungsstufe 62 kann bevorzugt eine Ausgangsschicht und eine oder mehrere Zwischenschichten aufweisen, wobei sowohl die Ausgangsschicht als auch die jeweiligen Zwischenschichten Ergebnisse einer Klassifizierung des Betriebszustands ausgeben. Beispielsweise kann eine erste Zwischenschicht zur Ausgabe eines Zwischenergebnisses C1 bzgl. einer Ereignisklassifizierung (Fehler, Last etc.), eine zweite Zwischenschicht zur Ausgabe eines Zwischenergebnisses C2 bzgl. einer Fehlerart und die Ausgangsschicht zur Ausgabe eines Ergebnisses C3 bzgl. einer Fehlerortbestimmung vorgesehen sein. Somit können die Zwischenschichten und die Ausgangsschicht aggregierte (Zwischen-) Ergebnisse liefern, die konkrete Aussagen bezüglich der Ereignisklassifizierung (z.B. Kurzschluss, Inrush, Last, Pendelung), der Fehlerart (z.B. 3-polig, 2-polig, 1-polig) und dem detektierten Fehlerort machen. Weitere Zwischenschichten für zusätzliche Zwischenergebnisse können außerdem vorgesehen sein. Ein wesentlicher Vorteil der Integration dieser zusätzlichen Zwischenschichten liegt in der Erhöhung der Entscheidungstransparenz des neuronalen Netzes.

Schließlich wird durch Zusammenfassung aller (Zwischen-) Ergebnisse ausgangsseitig von der Weiterverarbeitungsstufe 62 der Auswerteinrichtung 40 eine vollständige Klassifizierung des aktuellen Betriebszustands des Energieversorgungsnetzes ausgegeben.

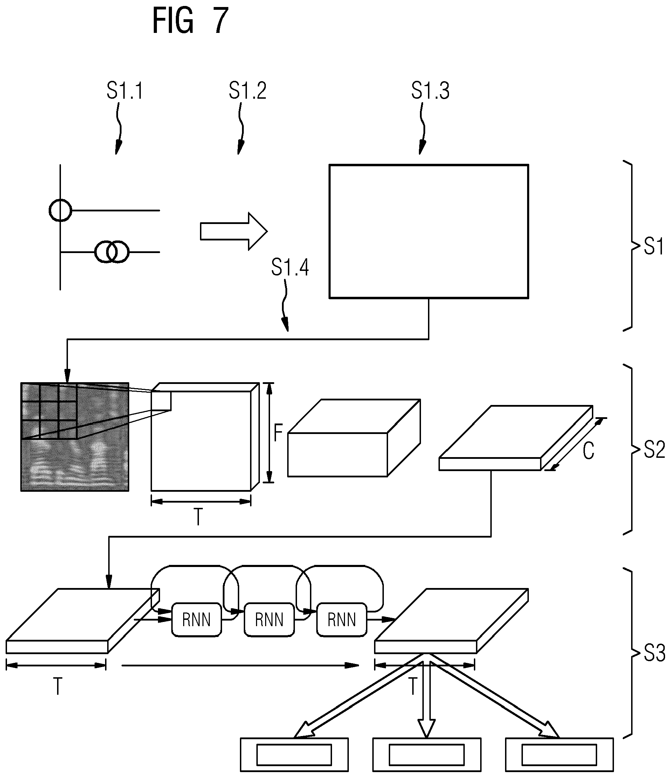

Die Vorgehensweise zur Analyse der Messwerte und insbesondere die Arbeitsweise der Auswerteinrichtung 40 wird nachfolgend anhand von Figur 7 eingehender erläutert. Figur 7 ist grob in drei Arbeitsschritte S1-S3 unterteilt: S1 stellt einen Erfassungs- und Vorverarbeitungsschritt, S2 einen Schritt der grafischen Mustererkennung und S3 einen Schritt der zeitlichen Analyse und Ausgabe der Ergebnisse dar.

Wie oben bereits erläutert, werden an einer Messstelle im Energieversorgungsnetz im Schritt S1.1 Messwerte, beispielsweise Verläufe von Strom und Spannung, erfasst. Dies erfolgt vorzugsweise für jede Phase eines mehrphasigen Energieversorgungsnetzes separat, wobei zur Erfassung und Digitalisierung der Messwerte beispielsweise eine Merging Unit mit einer Abtastrate von z.B. 14.4 kHz eingesetzt werden kann, um auch hochfrequente Signalanteile abbilden zu können. Die erfassten Messwerte werden in einem Schritt S1.2 einer Schutzeinrichtung zugeführt, die beispielsweise so aufgebaut sein kann, wie es im Zusammenhang mit Figur 4 erläutert worden ist. In der Schutzeinrichtung (optional auch vor der Übertragung zur Schutzeinrichtung) findet in Schritt S1.3 eine Vorverarbeitung der Messwerte statt. Konkret wird in Schritt S1.3 eine auf den Messwerten basierende grafische Darstellung erzeugt, bei der es sich beispielsweise um ein Spektrogramm handeln kann. Die Vorverarbeitung kann in diesem Fall analog zur Erläuterung zu Figur 5 erfolgen. Dabei wird für jede Messgröße (z.B. Strom, Spannung), jede Phase und ggf. jede Messstelle eine separate grafische Darstellung erzeugt.

Die jeweilige grafische Darstellung wird nachfolgend in Schritt S1.4 an die Eingangsstufe der Auswerteinrichtung übergeben. Dort findet mit einem sogenannten gefalteten neuronalen Netz (convolutional neural network - CNN) eine Mustererkennung statt, bei der charakteristische Eigenschaften der grafischen Darstellung identifiziert werden. Dazu wird die grafische Darstellung in einem oder mehreren Durchgängen mit einem digitalen Filter untersucht, dessen Filtergewichte in einer Trainingsphase auf Muster spezialisiert wurden, die bestimmte Betriebszustände des Energieversorgungsnetzes in der grafischen Darstellung hinterlassen. Während der in Schritt S2 stattfindenden Analyse in der Eingangsstufe werden dabei aus der grafischen Darstellung Eigenschaften (sogenannte "Features") extrahiert und in Eigenschaftskarten, sogenannten "Feature Maps", zusammengefasst. Dieser Vorgang wird als Eigenschaftsextraktion (Feature Extraction) bezeichnet.

Die in Figur 7 dargestellten Parameter bedeuten hierbei T: Zeit, F: Frequenz und C: Anzahl der Filter pro CNN multipliziert mit der Anzahl der einzelnen betrachteten Kanäle. Konkret können mehrere aufeinanderfolgende Schichten von CNNs eingesetzt werden, um aus der grafischen Darstellung relevante Information zu extrahieren, welche die einzelnen Vorgänge im Signal charakterisieren. Die Schichten des CNNs können hierbei komplett neu trainiert worden sein. In diesem Fall werden die verwendeten Filtergewichte mittels "supervised learning" ausgehend von einem Standardwert oder einem zufälligen Wert in mehreren Iterationen derart angepasst, bis eine Erkennung der relevanten Muster sichergestellt werden kann. Alternativ kann für das CNN jedoch auch ein auf gewöhnliche Bilddaten (Tiere, Gegenstände, Personen, Symbole etc.) vortrainiertes neuronales Netz eingesetzt werden, um die benötigte Menge an Trainingsdaten und die hierfür aufzuwendende Zeit zu reduzieren. Ein solches vortrainiertes neuronales Netz wird mittels supervised learning in einer Spezialtrainingsphase dazu ertüchtigt, Muster spezieller Betriebszustände in Energieversorgungsnetzen zu erkennen und zu klassifizieren. Beispielsweise können sie darauf trainiert sein, charakteristische Muster, wie sie bei hochohmigen Erdfehlern auftreten, zu identifizieren.

Die aus der grafischen Darstellung mit der Eingangsstufe extrahierten Merkmale werden anschließend an die Weiterverarbeitungsstufe der Auswerteinrichtung übermittelt und dort in Schritt S3 weiterverarbeitet. Zudem wird der mit der Eingangsstufe durchgeführte Analyseprozess mit einem nächsten Zeitschritt fortgesetzt, so dass der Weiterverarbeitungsstufe der Auswerteinrichtung fortlaufend extrahierte Merkmale zugeführt werden, die den Betriebszustand des Energieversorgungsnetzes zu aufeinanderfolgenden Zeitpunkten angeben.

Die Weiterverarbeitungsstufe der Auswerteinrichtung umfasst ein auf ein zeitliches Verhalten von Daten spezialisiertes neuronales Netz. Konkret kann es sich beispielsweise um ein rekurrentes neuronales Netz (RNN) handeln. Um den zeitlichen Verlauf im durch die Messwerte gebildeten Signal und damit die zeitliche Abhängigkeit der Vorgänge über einen größeren zeitlichen Kontext abbilden zu können, wird hierbei auf das RNN gesetzt, das die vom CNN gelernten Informationen aufnimmt und die zeitabhängige Information im Signal auswertet. Zu diesem Zweck weist das RNN mehrere Rückkopplungsschleifen auf und ist zur Auswertung zeitabhängiger Informationen trainiert.

Das RNN weist zudem eine "Multi Task Ausgabeschicht" auf, die aus der eigentlichen Ausgabeschicht (die letzte Schicht der RNN-Netzstruktur) sowie mehreren Zwischenschichten besteht, an denen ebenfalls klassifizierende Informationen ausgeleitet werden können (vgl. hierzu auch Figur 6). Um hierbei quasi gleichzeitig mehrere sich überlagernde Zustände im elektrischen Netz erkennen zu können, werden an unterschiedlichen Stellen im RNN verschiedene (Zwischen-) Ausgabeschichten verwendet. Diese (Zwischen-) Ausgabeschichten werden speziell für die Erkennung der möglichen Ereignisse im elektrischen Energieversorgungsnetz trainiert.

Abschließend liegt nach Schritt S3 eine oder mehrere einen Betriebszustand beschreibende Information vor. Beispielsweise kann eine solche Information
- das bloße Vorhandensein eines Fehlers,
- seine Einstufung als hochohmigen Erdfehler,
- die betroffene Phase
- einer bestimmten Leitung
- in einer Vorwärtsrichtung von der Messstelle aus gesehen und/oder
- einen konkreten Fehlerort
umfassen. Jede spezifische Teilinformation kann von einer der (Zwischen-) Ausgabeschichten bereitgestellt werden.

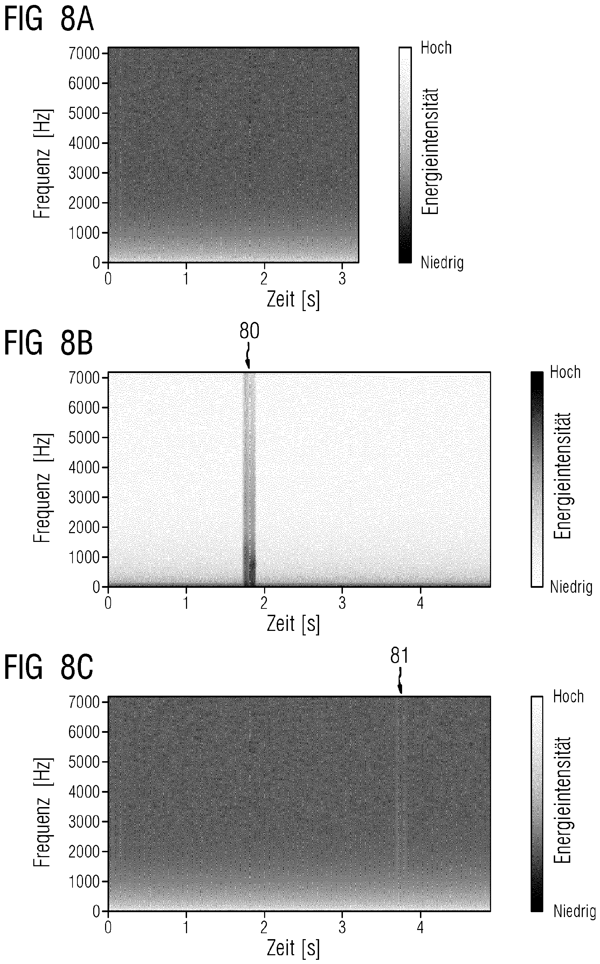

Figuren 8A-C zeigen schließlich beispielhaft Spektrogramme bestimmter Betriebszustände des Energieversorgungsnetzes. Beispielhaft zeigt hierzu Figur 8A ein Spektrogramm, das einen fehlerfreien Betriebszustand (Lastzustand) angibt. Figur 8B zeigt ein Spektrogramm, das einen zweipoligen Kurzschluss kennzeichnet mit einem charakteristischen Muster 80, das den Fehler angibt. Figur 8C schließlich zeigt ein Spektrogramm, das einen hochohmigen Erdfehler angibt. Beispielhaft sei auf energieintensive charakteristische Muster 81 in Form von vertikalen Streifen hingewiesen, die sich insbesondere in höheren Harmonischen der Grundfrequenz finden lassen und den entsprechenden Fehlerzustand charakterisieren. Nach einem hinreichenden Training ist insbesondere das CNN in der Lage, solche speziellen Muster erkennen und den zugehörigen Fehlerzuständen zuordnen zu können.

Gemeinsam mit der zugehörigen Zeitinformation, die durch das RNN ermittelt und eingestuft werden kann, ermöglicht diese Unterscheidung anhand einer auf den Messwerten basierenden grafischen Darstellung eine empfindliche und zuverlässige Aussage über den aktuellen Betriebszustand des Energieversorgungsnetzes.

Zusammengefasst ist somit festzustellen, dass bei der beschriebenen Schutzeinrichtung im Unterschied zu bisher üblichen Schutzverfahren kein starrer Algorithmus mit festen vorgegebenen Regeln für die Erkennung eines Betriebszustands, z.B. eines hochohmigen Erdschlusses, verwendet wird. Stattdessen werden Methoden des Deep Learning eingesetzt, bei denen - ohne die Vorgabe starrer Regeln - das System selbst erlernt, auf welche Eigenheiten es achten muss, um eine zuverlässige Klassifizierung eines Ereignisses vorzunehmen. Die vorgeschlagene Lösung hat unter anderem den Vorteil, dass alle in den verwendeten Messwerten zur Verfügung stehenden Informationen verwendet werden können. Dies ist insbesondere dann von Vorteil, wenn solche Informationen und die daraus abgeleiteten Muster auf den ersten Blick nicht offensichtlich erkennbar sind und somit nicht direkt auf einen speziellen Betriebszustand hinweisen. Durch die beschriebene Art der Auswerteinrichtung, insbesondere deren konkreten Aufbau mit einem CNN und einem RNN lassen sich solche nicht offensichtlichen Muster durch vorteilhaftes Ausnutzen der Leistungsfähigkeit von Systemen der künstlichen Intelligenz erkennen und einstufen. Außerdem ist durch ein fortlaufendes Training eine ständige Verbesserung und Anpassung an die Verhältnisse des Energieversorgungsnetzes in unterschiedlichen Netztopologien möglich. Mit der beschriebenen Lösung wird es insbesondere ermöglicht, Fehlerzustände, z.B. hochohmige Erdschlüsse, zu erfassen, die bisher nicht oder nur schwer von deterministischen Schutzeinrichtungen erkannt werden konnten. Mögliche Folgeschäden durch die fehlende Erkennung eines Fehlers, wie z.B. Ausweitung eines Erdschlusses zum Doppelerdschluss, Gefährdung von Personen oder Entstehung von Bränden können so vermieden werden.

Die beschriebene Lösung kann in einer zentralen Schutzstruktur mit einer zentralen Schutzeinrichtung (z.B. einer cloudbasierten Schutzeinrichtung) oder in einer dezentralen Struktur mit mehreren lokalen Schutzgeräten realisiert werden und ist damit an verschiedenste Anforderungen und Ausbaustufen bestehender Energieversorgungsnetze anpassbar.

Voranstehend wurde somit eine neue Schutzeinrichtung beschrieben, die eine Auswertung mit mindestens einem neuronales Netz umfasst, mit dem sie in vorteilhafter Weise Schutzfunktionen für ein Energieversorgungsnetz wahrnimmt. Die beschriebene Schutzeinrichtung weist zusammengefasst unter anderem folgende Vorteile auf:
- Die Schutzeinrichtung stellt ein selbstlernendes System dar, das sich permanent dem sich ändernden Energieversorgungsnetz anpasst.
- Die Schutzeinrichtung zeichnet sich durch eine hohe Selektivität und schnelle Auslösezeiten aus und kann selbst solche Fehlerzustände (z.B. hochohmige Erdschlüsse) erkennen, die mit herkömmlichen Schutzeinrichtungen nicht oder nur schwer erkannt werden können.
- Die Schutzeinrichtung ist unabhängig von einer Gerätehardware und kann in lokalen Schutzeinrichtungen oder einer zentralen Hardware eingesetzt werden.
- Die Schutzeinrichtung kann auf einer Cloud-Plattform realisiert sein und ihre Funktionen als digitalen Service anbieten.
- Die Schutzeinrichtung kann für jede beliebige Topologie des Energieversorgungsnetzes auf beliebiger Ebene (Feldebene, Stationsebene, Leitstellenebene) eingesetzt werden.

Obwohl die Erfindung vorstehend im Detail durch bevorzugte Ausführungsbeispiele näher illustriert und beschrieben worden ist, ist die Erfindung nicht durch die offenbarten Beispiele eingeschränkt und andere Variationen können vom Fachmann hieraus abgeleitet werden, ohne den Schutzumfang der nachfolgenden Patentansprüche zu verlassen.

## Patentansprüche

1. Schutzeinrichtung (22) zum Überwachen eines elektrischen Energieversorgungsnetzes (10), mit einer Auswerteinrichtung (40), die dazu eingerichtet ist, unter Verwendung von Messwerten, die einen elektrischen Zustand des Energieversorgungsnetzes (10) an zumindest einer Messstelle angeben, eine Entscheidung zu treffen, ob sich das Energieversorgungsnetz (10) in einem zulässigen oder einem unzulässigen Betriebszustand befindet, wobei die Auswerteinrichtung (40) ein künstliches neuronales Netz umfasst;
**dadurch gekennzeichnet, dass**
- die Auswerteinrichtung (40) dazu ausgebildet ist, zur Entscheidung über den Betriebszustand des Energieversorgungsnetzes (10) eine Mustererkennung einer auf den Messwerten basierenden grafischen Darstellung (G) heranzuziehen.

2. Schutzeinrichtung (22) nach Anspruch 1,
**dadurch gekennzeichnet, dass**
- das künstliche neuronale Netz eine Eingangs-Stufe (61) aufweist, die zur grafischen Mustererkennung trainiert ist.

3. Schutzeinrichtung (22) nach Anspruch 2,
**dadurch gekennzeichnet, dass**
- die Eingangs-Stufe (61) ein gefaltetes neuronales Netz umfasst.

4. Schutzeinrichtung (22) nach Anspruch 2 oder 3,
**dadurch gekennzeichnet, dass**
- die Eingangs-Stufe (61) vor ihrem Einsatz in der Schutzeinrichtung (22) zur Unterscheidung beliebiger grafischer Darstellungen vortrainiert worden ist.

5. Schutzeinrichtung (22) nach einem der vorangehenden Ansprüche,
**dadurch gekennzeichnet, dass**
- als grafische Darstellung (G) ein Spektrogramm verwendet wird.

6. Schutzeinrichtung (22) nach Anspruch 5,
**dadurch gekennzeichnet, dass**
- das Spektrogramm mittels einer Fourier-Transformation erzeugt ist.

7. Schutzeinrichtung (22) nach einem der vorangehenden Ansprüche,
**dadurch gekennzeichnet, dass**
- die Schutzeinrichtung (22) eine Messwerterfassungseinrichtung (41) zum Erfassen der Messwerte und ein Vorverarbeitungsmodul (42) umfasst, das dazu ausgebildet ist, die grafische Darstellung (G) auf Basis der erfassten Messwerte zu erzeugen.

8. Schutzeinrichtung (22) nach einem der vorangehenden Ansprüche,
**dadurch gekennzeichnet, dass**
- an die Eingangs-Stufe (61) eine Weiterverarbeitungs-Stufe (62) anschließt, die zur Untersuchung eines zeitlichen Verhaltens von an der Weiterverarbeitungs-Stufe (62) anliegenden Daten ausgebildet ist.

9. Schutzeinrichtung (22) nach Anspruch 8,
**dadurch gekennzeichnet, dass**
- die Weiterverarbeitungs-Stufe (62) zumindest teilweise als rekurrentes neuronales Netz ausgebildet ist.

10. Schutzeinrichtung (22) nach einem der vorangehenden Ansprüche,
**dadurch gekennzeichnet, dass**
- das künstliche neuronale Netz eine Ausgabe-Schicht und zumindest eine Zwischenausgabe-Schicht umfasst, wobei die Ausgabe-Schicht und jede Zwischenausgabe-Schicht zur Ausgabe eines spezifischen Ergebnisses hinsichtlich des Betriebszustands des Energieversorgungsnetzes (10) eingerichtet sind.

11. Schutzeinrichtung (22) nach Anspruch 10,
**dadurch gekennzeichnet, dass**
- als spezifische Ergebnisse zumindest zwei der folgenden Informationen ausgegeben werden:
- eine Information über das Vorhandensein eines Fehlers;
- eine Information zur Angabe eine fehlerbehafteten Phase;
- eine Information über eine Richtung, in der ein Fehler bezüglich der zumindest einen Messstelle liegt;
- eine Information zur Angabe einer fehlerbehafteten Leitung; und/oder
- eine Information über einen Fehlerort, an dem ein Fehler im Energieversorgungsnetz (10) aufgetreten ist.

12. Schutzeinrichtung (22) nach einem der vorangehenden Ansprüche,
**dadurch gekennzeichnet, dass**
- die Schutzeinrichtung (22) zum lokalen Betrieb an einem Einbauort in der Nähe der Messstelle eingerichtet ist und eine Kommandoeinrichtung zur Ausgabe von Steuerbefehlen an Schalteinrichtungen des Energieversorgungsnetzes (10) aufweist.

13. Schutzeinrichtung (22) nach einem der Ansprüche 1 bis 11,
**dadurch gekennzeichnet, dass**
- die Schutzeinrichtung (22) eine zentrale Schutzeinrichtung ist, die dazu eingerichtet ist, von Sensoren an mehreren Messstellen des Energieversorgungsnetzes (10) Messwerte zu empfangen und Schalteinrichtungen an mehreren Stellen des Energieversorgungsnetzes (10) anzusteuern.

14. Verfahren zum Überwachen eines elektrischen Energieversorgungsnetzes (10), bei dem
- an zumindest einer Messstelle des Energieversorgungsnetzes (10) Messwerte erfasst werden, die einen elektrischen Zustand des Energieversorgungsnetzes (10) an der Messstelle angeben;
- die Messwerte an eine Schutzeinrichtung (22) übermittelt werden; und
- unter Verwendung der Messwerte mittels einer Auswerteinrichtung (40) der Schutzeinrichtung eine Entscheidung getroffen wird, ob sich das Energieversorgungsnetz (10) in einem zulässigen oder einem unzulässigen Betriebszustand befindet, wobei die Auswerteinrichtung (40) ein künstliches neuronales Netz umfasst;
**dadurch gekennzeichnet, dass**
- die Auswerteinrichtung (40) zur Entscheidung über den Betriebszustand des Energieversorgungsnetzes (10) eine Mustererkennung einer auf den Messwerten basierenden grafischen Darstellung (G) heranzieht.

15. Computerprogrammprodukt, umfassend Befehle, die bei der Ausführung des Programms durch eine Datenverarbeitungseinrichtung diese dazu veranlassen, das Verfahren nach Anspruch 14 auszuführen.
